# EUROPEAN PATENT APPLICATION

(11) **EP 4 428 686 A1**
(43) Date of publication of application: **11.09.2024**
(21) Application number: 24155248.8
(22) Date of filing: 01.02.2024
(51) Int. Cl.: G06F 9/48

(54) **APPARATUS AND METHOD FOR OFFLOADING PARALLEL COMPUTATION TASK**

(30) Priority: 06.03.2023 KR 20230029137
(71) Applicant: Electronics and Telecommunications Research Institute, Daejeon 34129 (KR)
(72) Inventor: AHN, Shin-Young, Daejeon 34129 (KR); KIM, Young-Ho, Daejeon 34129 (KR); LIM, Eun-Ji, Daejeon 34129 (KR); HAN, Woo-Jong, Daejeon 34129 (KR); PARK, Yoo-Mi, Daejeon 34129 (KR); JUN, Sung-Ik, Daejeon 34129 (KR)
(74) Representative: Betten & Resch

(57) **Abstract**

Disclosed herein is an apparatus and method for offloading parallel computation tasks. The apparatus inserts requests to execute multiple parallel thread groups into at least one parallel thread group queues, wherein when a preset order of priority exists the requests to execute is inserted into the at least one parallel thread group queues according to the preset order of priority, executes parallel threads of the parallel thread groups using a parallel thread group execution request entry extracted from the parallel thread group queue according to the order of priority, inserts an execution result into an execution result queue when execution of the parallel threads according to an execution sequence scheduled in execution startup routine code is terminated, and checks the execution termination state of the parallel thread groups by checking the execution result queue.

## Description

### CROSS REFERENCE TO RELATED APPLICATION

This application claims the benefit of Korean Patent Application No. 10-2023-0029137, filed March 6, 2023, which is hereby incorporated by reference in its entirety into this application.

### BACKGROUND OF THE INVENTION

### 1. Technical Field

The present disclosure relates generally to technology for parallel computation tasks, and more particularly to technology for offloading parallel computation tasks.

### 2. Description of the Related Art

In order to meet the increasing needs for high-performance computing, a Central Processing Unit (CPU) of a computing device has evolved into a multicore or manycore processor. However, only a method of increasing cores of a CPU cannot satisfy the needs for high-performance computing. A computing system has been developed to further include one or more processors specialized in various types of parallel processing, such as a Graphic Processing Unit (GPU), a Field-Programmable Gate Array (FPGA), a Digital Signal Processor (DSP), a Neural Processing Unit (NPU), an Accelerated Processing Unit (APU), and the like. Such a processor specialized in parallel processing is generally referred to as an 'accelerator'. The accelerator is used to more quickly process computations having high parallelism offloaded thereto, among computations executed on a CPU. A CPU and an accelerator were made as separate System-on-Chips (SoC) first, and later a heterogeneous manycore processor configured to integrate cores of a CPU and cores of an accelerator into a single SoC has emerged. Such a combination of heterogeneous architectures reduces not only communication costs by decreasing a physical distance between a host core and a heterogeneous accelerating core and by increasing bandwidth but also the overhead of offloading parallel computation tasks by enabling global memory to be shared, thereby achieving high performance.

In order to offload parallel computation tasks to such an accelerator, a device-specific private programming model, such as Compute Unified Device Architecture (CUDA) or Heterogeneous-Compute Interface for Portability (HIP), or an open standard programming model in industry, such as OpenCL, OpenMP, OpenACC, and the like, is used.

When Open Computing Language (OpenCL), which is a commonly used industry standard programming model, is used, it is possible to write a program having excellent compatibility such that the program can be run in various accelerator platforms. Further, an OpenCL program can also be executed on a CPU, and provides a method for executing large numbers of data-parallel threads capable of accelerating operations of a user in various accelerator platforms, such as a GPU, an FPGA, and the like. OpenCL, which is a programming model that is similar to C, supports writing of a parallel computation kernel program executable in an accelerator and also supports writing of a host program by providing OpenCL APIs through an OpenCL runtime. The written OpenCL program is compiled into host executable code and accelerator executable code by a compiler so as to be executed in a host and an accelerator with the help of an OpenCL runtime library and an accelerator driver.

A CPU and accelerators are designed as various hardware architectures. For example, a CPU generally has a Simultaneous Multi-Threading (SMT) design pattern, and accelerators may have hardware design patterns that support various data-level parallelism or thread-level parallelism, such as Single Instruction, Multiple Data (SIMD), Single Instruction, Multiple Threads (SIMT), and Multiple Instructions, Multiple Data (MIMD). MIMD has a large number of scalar cores or multi-threaded cores such that data-parallel tasks may be flexibly mapped to these cores, but has a disadvantage in that the efficiency of data-level parallelism is lower than that of SIMD. Conversely, SIMD exhibits good data-level parallelism, but is weak for irregular data parallelism. SIMT is a design pattern having intermediate characteristics between SIMD and MIMD, and proposes an alternative between programmability and computation efficiency. SIMT has proved its usefulness by being applied to general-purpose computation on graphics processing units (GPGPU) of Nvidia.

As described above, accelerators have various types of cores and various types of control structures depending on the architecture design pattern, and may have various memory hierarchy architectures. Accordingly, a method for effectively performing parallel computation tasks (e.g., OpenCL kernel) to be suitable for the various types of accelerator hardware design is required.

GPUs of Nvidia and AMD have hardware schedulers of different levels in order to efficiently perform and manage parallel computation tasks. Nvidia provides a hardware thread group scheduler and also includes a warp scheduler for scheduling the threads of thread groups scheduled on each streaming multiprocessor (corresponding to an OpenCL compute unit) for each SIMD unit called `warp'.

Meanwhile, Korean Patent Application Publication No. 10-2018-0076051, titled "Method for processing OpenCL kernel and computing device therefor", discloses a hierarchical control core architecture for executing parallel computation tasks on many cores.

However, Korean Patent Application Publication No. 10-2018-0076051 discloses a scheduling mechanism using dedicated hardware and has disadvantages in that an accelerator hardware architecture and a control structure therefor are complicated and in that it is difficult to flexibly develop and apply a new scheduling method.

### SUMMARY OF THE INVENTION

An object of the present disclosure is to quickly execute parallel computation tasks in a heterogeneous core processor system having heterogeneous accelerating cores without a hardware scheduler.

Another object of the present disclosure is to provide a hardware and software execution support architecture and flow that can be effectively implemented in a large-scale parallel processing environment.

A further object of the present disclosure is to simultaneously provide execution performance of a large-scale parallel-processing computation element and flexibility for responding to various workloads.

Yet another object of the present disclosure is to prevent scheduling entries having low priority from being starved (indefinitely waiting) without software intervention.

In order to accomplish the above objects, an apparatus for offloading parallel computation tasks according to an embodiment of the present disclosure includes one or more processors and memory for storing at least one program executed by the one or more processors. The at least one program may insert requests to execute multiple parallel thread groups into at least one parallel thread group queues, wherein when a preset order of priority exists the requests to execute is inserted into the at least one parallel thread group queues according to the preset order of priority, execute parallel threads of the parallel thread groups using a parallel thread group execution request entry extracted from the parallel thread group queue according to the order of priority, insert an execution result into an execution result queue when execution of the parallel threads is terminated, check an execution termination state of the parallel thread groups by checking the execution result reported from the execution result queue, and execute parallel threads of parallel thread groups corresponding to the execution termination state.

Here, the at least one program may discover a request to execute a parallel thread group that is not scheduled for a preset time period by using a programmable timer in the parallel thread group queues corresponding to the priority.

Here, when it discovers the request to execute the parallel thread group that is not scheduled for the preset time period, the at least one program may move the request to execute the parallel thread group that is not scheduled for the preset time period to the last execution request entry of a parallel thread group queue having second-highest priority.

Here, the at least one program may load information required for execution of parallel computation kernel code from execution states information into a register of an accelerating core by executing execution startup routine code for each parallel thread of the parallel thread groups, and may then execute the parallel computation kernel code.

Here, the execution states information may include common state information for identifying the parallel thread groups and individual parallel thread state information for identifying parallel threads included in the parallel thread groups.

Here, when the total number of parallel threads in one of the parallel thread groups is greater than the number of hardware threads included in an accelerating core group, the at least one program may switch to a context block of a stalled parallel thread so as to be loaded into scratchpad memory using thread switching logic.

Here, the at least one program may cause a representative parallel thread selected in advance from among parallel threads included in the parallel thread groups to insert the execution result of the parallel thread group into the execution result queue.

Here, the at least one program may execute a first parallel thread group selected from among the multiple parallel thread groups on any one accelerating core group.

Here, when it reads a value of an idle status register of the accelerating core group and confirms that the accelerating core group is in an idle state, the at least one program may execute all of parallel threads included in the first parallel thread group.

Here, the at least one program may change the value of the idle status register from IDLE to BUSY when all of the parallel threads included in the first parallel thread group are executed, and may change the value of the idle status register from BUSY to IDLE when execution of all of the parallel threads is terminated.

Also, in order to accomplish the above objects, a method for offloading parallel computation tasks, performed by an apparatus for offloading parallel computation tasks, according to an embodiment of the present disclosure includes inserting requests to execute multiple parallel thread groups into at least one parallel thread group queues, wherein when a preset order of priority exists the requests to execute is inserted into the at least one parallel thread group queues according to the preset order of priority, executing parallel threads of the parallel thread groups using a parallel thread group execution request entry extracted from the parallel thread group queue according to the order of priority, inserting an execution result into an execution result queue when execution of the parallel threads is terminated, checking an execution termination state of the parallel thread groups by checking the execution result reported from the execution result queue, and executing parallel threads of parallel thread groups corresponding to the execution termination state.

Here, executing the parallel threads may comprise discovering a request to execute a parallel thread group that is not scheduled for a preset time period by using a programmable timer in the parallel thread group queues corresponding to the priority.

Here, executing the parallel threads may comprise, when the request to execute the parallel thread group that is not scheduled for the preset time period is discovered, moving the request to execute the parallel thread group that is not scheduled for the preset time period to the last execution request entry of a parallel thread group queue having second-highest priority.

Here, executing the parallel threads may comprise executing parallel computation kernel code after loading information required for execution of the parallel computation kernel code from execution states information into a register of an accelerating core by executing execution startup routine code for each parallel thread of the parallel thread groups.

Here, the execution states information may include common state information for identifying the parallel thread groups and individual parallel thread state information for identifying parallel threads included in the parallel thread groups.

Here, executing the parallel threads may comprise, when the total number of parallel threads in one of the parallel thread groups is greater than the number of hardware threads included in an accelerating core group, switching to a context block of a stalled parallel thread so as to be loaded into scratchpad memory using thread switching logic.

Here, inserting the execution result may comprise inserting, by a representative parallel thread selected in advance from among parallel threads included in the parallel thread groups, the execution result of the parallel thread group into the execution result queue.

Here, the method may further include, before inserting the requests to execute the multiple parallel thread groups, executing a first parallel thread group selected from among the multiple parallel thread groups on any one accelerating core group.

Here, executing the first parallel thread group may comprise executing all of parallel threads included in the first parallel thread group when it is confirmed that the accelerating core group is in an idle state by reading a value of an idle status register of the accelerating core group.

Here, executing the first parallel thread group may comprise changing the value of the idle status register from IDLE to BUSY when all of the parallel threads included in the first parallel thread group are executed and changing the value of the idle status register from BUSY to IDLE when execution of all of the parallel threads is terminated.

### BRIEF DESCRIPTION OF THE DRAWINGS

The above and other objects, features, and advantages of the present disclosure will be more clearly understood from the following detailed description taken in conjunction with the accompanying drawings, in which:
FIG. 1 is a view illustrating parallel computation tasks according to an embodiment of the present disclosure;
FIG. 2 is a block diagram illustrating an apparatus for offloading parallel operation tasks according to an embodiment of the present disclosure;
FIG. 3 is a view illustrating a process of executing a single parallel thread group between the device driver of a host core and an accelerating core group (ACG) according to an embodiment of the present disclosure;
FIG. 4 is a view illustrating a process of scheduling consecutive parallel thread groups between the device driver of a host core and an ACG according to an embodiment of the present disclosure;
FIG. 5 is a view illustrating a process of scheduling multiple parallel thread groups to which priority is applied between the device driver of a host core and an ACG according to an embodiment of the present disclosure;
FIG. 6 is a view illustrating pipelining parallel thread group execution requests and execution result reports between a device driver and an execution startup routine according to an embodiment of the present disclosure;
FIG. 7 is a view illustrating parallel computation task context according to an embodiment of the present disclosure;
FIG. 8 is a flowchart illustrating a method for offloading parallel computation tasks for executing a single parallel thread group according to an embodiment of the present disclosure;
FIG. 9 is a flowchart illustrating a method for offloading parallel computation tasks for multiple parallel thread groups (PTGs) according to an embodiment of the present disclosure;
FIG. 10 is a flowchart illustrating in detail an example of the step of inserting a PTG execution request into a parallel thread group queue (PTGQ) illustrated in FIG. 9; and
FIG. 11 is a view illustrating a computer system according to an embodiment of the present disclosure.

### DESCRIPTION OF THE PREFERRED EMBODIMENTS

The present disclosure will be described in detail below with reference to the accompanying drawings. Repeated descriptions and descriptions of known functions and configurations which have been deemed to unnecessarily obscure the gist of the present disclosure will be omitted below. The embodiments of the present disclosure are intended to fully describe the present disclosure to a person having ordinary knowledge in the art to which the present disclosure pertains. Accordingly, the shapes, sizes, etc. of components in the drawings may be exaggerated in order to make the description clearer.

Throughout this specification, the terms "comprises" and/or "comprising" and "includes" and/or "including" specify the presence of stated elements but do not preclude the presence or addition of one or more other elements unless otherwise specified.

Hereinafter, a preferred embodiment of the present disclosure will be described in detail with reference to the accompanying drawings.

In the present disclosure, a method for quickly executing parallel computation tasks by effectively mapping many threads of the parallel computation tasks (e.g., OpenCL kernel) to heterogeneous many-cores in a heterogeneous core processor including MIMD-style heterogeneous many-cores, which support a relatively small number of threads per core compared to GPGPU, is presented.

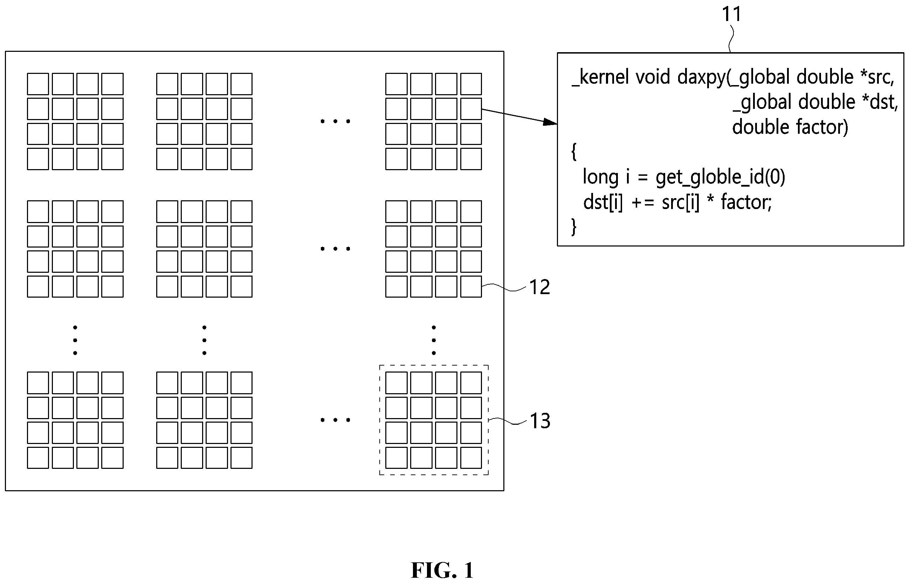

FIG. 1 is a view illustrating Parallel Computation Tasks (PCT) according to an embodiment of the present disclosure.

Referring to FIG. 1, parallel computation tasks are a concept similar to offloading tasks of CUDA or OpenCL and are computation tasks based on thread-level parallelism. A multithread-based programming model, such as OpneMP, is a method in which a thread sequentially processes data by repeatedly processing data using a loop, and may perform a relatively large number of computations.

Parallel computation tasks disclosed in the present disclosure are configured such that a kernel function for performing a relatively small computation is executed as in an embodiment of the parallel computation kernel 11 illustrated in FIG. 1. One example of the Parallel Computation Task (PCT) is OpenCL NDRange.

Large numbers of Parallel Threads (PT) 12 execute parallel computation kernel code 11, thereby performing the parallel computation tasks. One example of the parallel thread 12 is an OpenCL work-item.

Because the parallel threads 12 of the parallel computation tasks are executed on MIMD cores, the control flows of the respective threads may diverge, and the parallel threads are more effective for tasks requiring irregular data-parallelism.

Individually executing the parallel threads 12 on heterogeneous MIMD cores may cause a large overhead.

Accordingly, it is necessary to group the parallel threads 12 into a Parallel Thread Group (PTG) 13 and to perform collective scheduling in units of thread groups. One example of the parallel thread group 13 is an OpenCL work-group.

The execution model of the parallel computation tasks (PCT) is divided into two parts, like the execution model of CUDA or OpenCL. PCT kernels are executed on heterogeneous accelerating cores, and a host program (PCT App.) is executed on a host core. The host program configures PCT context for the PCT kernel in memory by being run in conjunction with an accelerator device driver, makes a request to execute the PCT kernel to the heterogeneous accelerating cores, and manages execution of the PCT kernel. Here, the PCT kernel threads are executed in parallel by making best use of the parallel processing architecture of the accelerators, and a parallel thread group may be formed by grouping multiple parallel threads (PTs) in order to reduce a scheduling overhead, which increases with an increase in the number of parallel threads. Generally, the PCT kernel may include an execution startup routine (similar to crt0), which manages a parallel thread (PT) such that the PT starts to be executed on a specific accelerator's computation core.

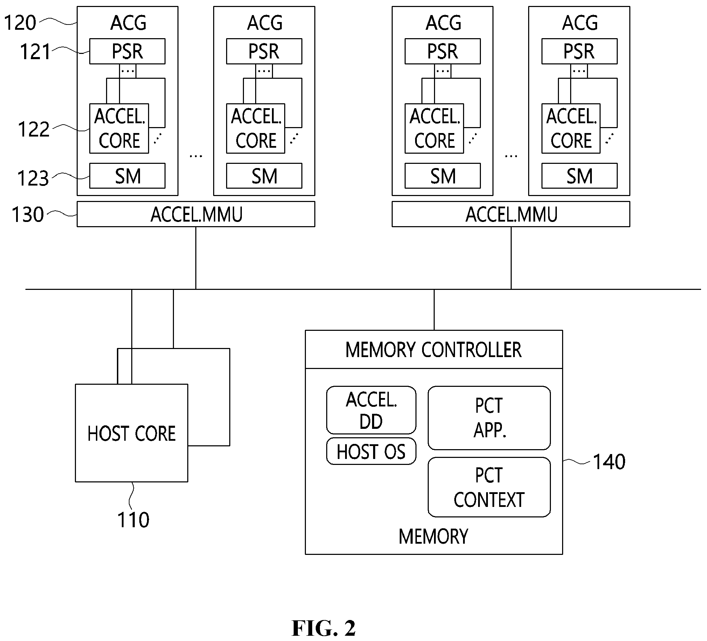

FIG. 2 is a block diagram illustrating an apparatus for offloading parallel computation tasks according to an embodiment of the present disclosure.

Referring to FIG. 2, it can be seen that the apparatus for offloading parallel computation tasks according to an embodiment of the present disclosure corresponds to a target heterogeneous core processor system for offloading parallel computation tasks.

Here, heterogeneous cores may correspond to computation cores differentiated from a host core on which an operating system (OS) is run.

The apparatus for offloading parallel computation tasks according to an embodiment of the present disclosure may include at least one host core 110, one or more Accelerating Core Groups (ACGs) 120, one or more accelerator memory management units (Accel. MMU) 130, and a memory controller 140.

The accelerating core group 120 may include a parallel thread group (PTG) scheduling register (PSR) 121 for simultaneously running one or more hardware threads (HTs), one or more accelerating cores 122, and scratchpad memory (SM) 123 for improving execution efficiency.

Here, the accelerating core group 120 may be formed by grouping one or more accelerating cores 122.

The accelerating core may provide at least one hardware thread (HT), and may include one or more Single Instruction Multiple Data (SIMD) computation elements shared by the hardware threads (HTs).

Here, a thread switching function may be provided such that, when at least one parallel thread (PT) executed by the hardware thread stalls, the accelerating core is able to execute another PT assigned thereto.

The one or more ACGs 120 may share a single accelerator memory management unit (Accel. MMU) 130. The accelerator memory management unit 130 may provide a function of conversion between a virtual address and a physical address such that parallel threads executed on the respective accelerating cores of the ACG 120 can be executed in a virtual address space. The host core 110 and the accelerating core groups 120 share memory, and an OS, an accelerator device driver, context required for performing parallel computation tasks, and the like may be arranged in the memory according to need.

The ACG 120 may receive a request to execute a parallel thread group (PTG), in which the number of parallel threads having a certain size is set as illustrated in FIG. 1, from the parallel computation task host program (PCT App.) executed on the host core 110.

Generally, the number of parallel threads in parallel computation tasks is greater than the maximum number of threads all of the accelerating cores can simultaneously execute at a specific time. When such a large number of parallel threads are individually scheduled on the accelerating cores (ACs), the number of parallel threads to be scheduled is significantly increased, and the computation performance of the accelerators may be degraded due to the scheduling overhead and delay. Therefore, parallel threads grouped into a parallel thread group (PTG) are scheduled on the accelerating core group. Here, the scheduling may correspond to setting multiple PTG scheduling registers (PSRs) in order to execute parallel threads (PTs) on the accelerating cores (ACs).

The apparatus for offloading parallel computation tasks according to an embodiment of the present disclosure may support and perform scheduling using a data structure (PTG Scheduling Register (PSR)) capable of collectively scheduling multiple parallel threads for multiple accelerating cores, and may include management registers.

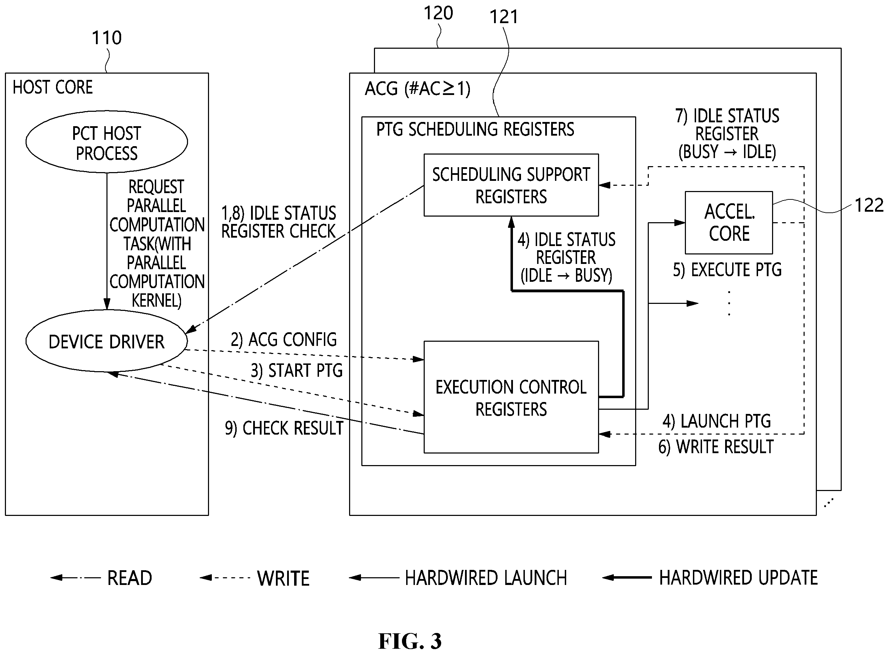

FIG. 3 is a view illustrating a process of executing a single parallel thread group between the device driver of a host and an accelerating core group (ACG) according to an embodiment of the present disclosure.

Referring to FIG. 3, a PCT host process may deliver binary execution code (a parallel computation kernel) of parallel threads to a device driver when it makes a request for a parallel computation task to the device driver. The parallel computation kernel may manage user-defined computation code and the start and termination of the parallel threads such that the user-defined computation code is executed through the parallel threads on accelerating cores, and may be configured with an execution startup routine for scheduling a subsequent parallel thread group on an accelerating core group.

Referring to FIG. 3, it can be seen that the process of executing a single parallel thread group (PTG) on a single accelerating core group (ACG) is illustrated. To this end, a PTG scheduling register (PSR) includes Scheduling Support Registers (SSRs) and Execution Control Registers (ECRs).

The scheduling support registers (SSRs) may include a Scheduling Control Register (SCR) capable of setting various options related to scheduling and an idle status register indicating the state of use of an ACG (occupied by parallel threads). The device driver may enable the execution startup routine to selectively apply various scheduling polices through the scheduling control register.

The execution control registers (ECRs) may include an identifier register for identifying the parallel thread group to be executed or the parallel thread group that is being executed, a data structure register required for executing a parallel thread group (PTG), a register for designating execution code, a register for simultaneous execution of parallel threads of a PTG, and a register for controlling and reporting a PTG termination state.

Some of the execution control registers may be connected to logic for simultaneously executing parallel threads on all of the accelerating cores of an accelerating core group (ACG).
1) First, the device driver of a host core 110 reads the value of the idle status register of an arbitrary ACG, thereby confirming that the ACG is in an idle state.

Here, 2) the device driver sets valid values in the registers for designating a PTG identifier, code required for execution, and a data structure, among the execution control registers, thereby preparing for execution of a parallel thread group (PTG).

Here, 3) the device driver sets a valid value in the PT simultaneous execution register, among the execution control registers, thereby executing all of the parallel threads (PTs) of the PTG.

Here, 4) when the value of the PT simultaneous execution register, among the execution control registers, is changed, the ACG may immediately change the value of the idle status register hardwired to be connected with the PT simultaneous execution register from IDLE to BUSY.

Here, 5) all of the accelerating cores (ACs) 122 execute the parallel threads (PTs), thereby executing the PCT kernel function.

Here, 6) when execution of all of the executed parallel threads is terminated, a representative parallel thread of the parallel threads may report a termination state, such as success/failure or the like, through a PTG termination register. The representative parallel thread may be a thread selected in advance to be responsible for checking the state or may be the last finished thread.

Here, 7) the representative parallel thread may update the value of the idle status register, thereby changing the state from BUSY to IDLE.

Here, 8) the device driver may check termination of execution of the parallel thread group through an interrupt or polling of the idle status register.

Here, 9) the device driver may check the execution result of the executed parallel thread group by reading from the PTG termination register.

Also, in the process of offloading parallel computation tasks, a new parallel thread group may be executed by repeating the above procedure.

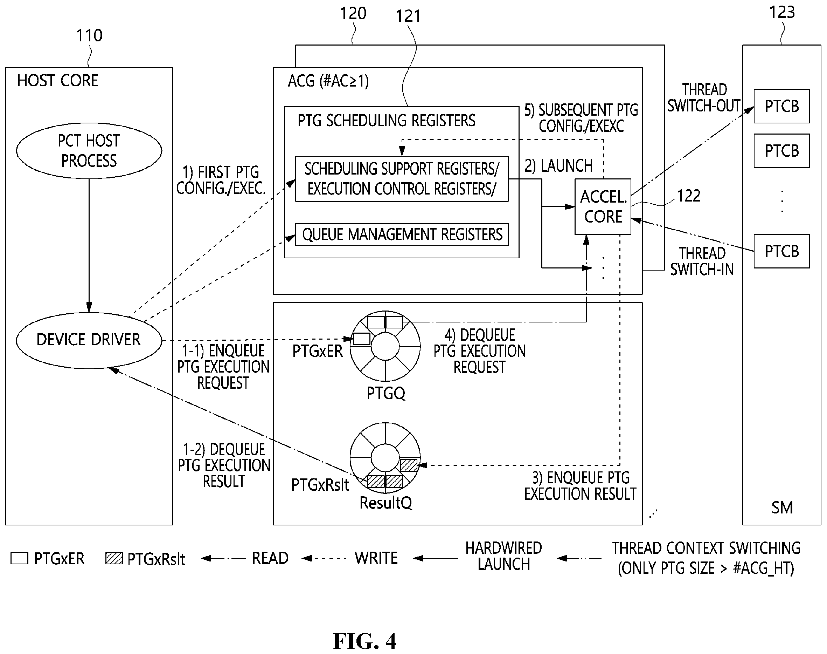

FIG. 4 is a view illustrating a process of scheduling consecutive parallel thread groups between the device driver of a host core and an accelerating core group (ACG) according to an embodiment of the present disclosure.

Referring to FIG. 4, it can be seen that the process of consecutively scheduling parallel thread groups (PTGs) on an accelerating core group (ACG) in order to effectively schedule the multiple PTGs is illustrated.

To this end, a device driver and a representative parallel thread may perform scheduling using queue management registers of a PTG Scheduling Register (PSR) 121. The queue management registers may include a base pointer register, a head offset register, and a tail offset register for a queue.

Here, the device driver may set a policy such that the execution startup routine code of the representative parallel thread executes consecutive parallel thread groups (PTGs) using a parallel thread group queue (PTGQ) through a scheduling control register.

First, 1) execution of the first PTG of the consecutive PTGs is performed through the process illustrated in FIG. 3, but after execution of the first PTG is terminated, the procedure from the reporting of the execution result to the execution of a new PTG may be performed differently.

Here, 2) after execution of the first PTG is terminated, the execution startup routine code of the representative parallel thread does not change the value of an idle status register (maintaining `BUSY'), and may report the execution result using an execution result queue (ResultQ), rather than a termination register.

Here, 3) the execution startup routine code of the representative parallel thread may insert the result entry of the terminated PTG into the ResultQ.

Here, 4) if the parallel thread group queue (PTGQ) is not empty, when execution of a PTG is terminated, the execution startup routine code of the representative parallel thread may extract a PTG execution request entry from the PTGQ.

Here, 5) the execution startup routine code of the representative parallel thread may execute the PTG corresponding to the extracted PTG execution request entry by setting execution control registers.

Here, the execution startup routine code of the representative parallel thread checks whether the PTGQ is empty, and when the PTGQ is not empty, the procedure from 2) to 5) may be repeated until the PTGQ becomes empty.

Also, 1-1) the device driver inserts multiple PTG Execution Requests (ERs) into the PTGQ immediately after execution of the first PTG is started, and when it detects an empty slot in the PTGQ by appropriately monitoring the state of the PTGQ management register, the device driver may additionally insert a PTG execution request.

Also, 1-2) the device driver checks the ResultQ by appropriately monitoring the state of the ResultQ management register and extracts a PTG result entry from the queue as quickly as possible, thereby performing follow-up processing.

Here, when the total number of parallel threads in the PTG is greater than the total number of hardware threads of the accelerating core group (ACG), the accelerating core 122 may switch to the Parallel Thread Context Block (PTCB) of another parallel thread that is stalled due to memory access or the like so as to be loaded into scratchpad memory SM 123 using thread switching logic (thread switch-in/out).

Here, when there is no PTG execution request entry in the PTGQ or when entries account for less than a preset percentage of the PTGQ size, the execution startup routine code of the representative parallel thread may deliver an interrupt to the host core 110, on which the device driver is executed, depending on the setting of the scheduling control register.

The device driver of the host core 110 receiving the interrupt may insert an additional PTG execution request entry into the PTGQ.

Here, the execution startup routine code of the representative parallel thread may deliver an interrupt to the host core 110 when the ResultQ is full or when the ResultQ is filled to a certain percentage or above.

Here, the device driver of the host core 110 receiving the interrupt may immediately perform follow-up processing including checking of a PTG execution result.

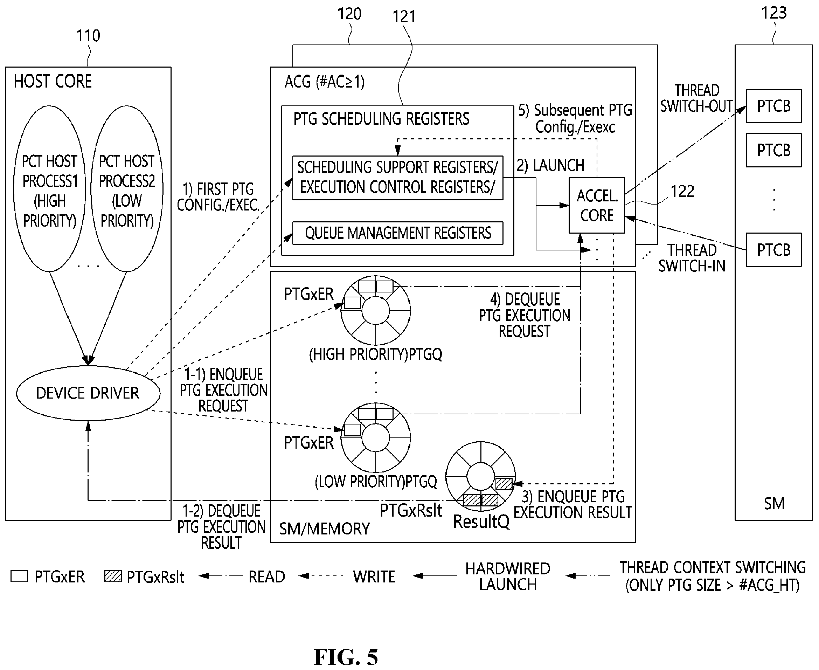

FIG. 5 is a view illustrating a process of executing multiple parallel thread groups to which priority is applied between the device driver of a host core and an accelerating core group (ACG) according to an embodiment of the present disclosure.

Referring to FIG. 5, it can be seen that a parallel thread group (PTG) scheduling process based on multiple parallel thread group queues (PTGQs) having different priority levels in each accelerating core group (ACG) 120 is illustrated.

Here, in the PTG scheduling process to which priority is applied, PTGs having different priority levels may be scheduled using separate priority queues according to a preset order of priority.

Here, in the PTG scheduling process to which priority is applied, requests to execute multiple PTGs may be inserted into any one of the PTGQs corresponding to the priority according to a preset order of priority.

For example, examples of the preset order of priority may be a priority order of PCT host processes, a priority order between multiple parallel computation tasks executed by a single PCT host process, or the like.

The multiple PTGQs and the single execution result queue (ResultQ) illustrated in FIG. 5 are configured in scratchpad memory (SM) 123 or memory.

The priority-based PTGQs may be maintained by forming a link in a hardware manner.

The number of valid entries in each PTGQ may vary depending on the value of a separate software-programmed register.

A device driver and the execution startup routine code of a representative parallel thread may operate the multiple PTGQs using multiple PTGQ management register sets.

Also, the execution startup routine code of the representative parallel thread may select any of various scheduling policies for extracting a PTG execution request from the multiple queues depending on the settings of PTG scheduling registers 121.

Also, in order to prevent an execution request in a low-priority PTGQ from being starved (indefinitely waiting), each accelerating core group (ACG) 120 may discover a request to execute a PTG that is not scheduled for a preset time period by using a programmable timer for each priority PTGQ.

Here, each ACG 120 may include automatic PTGQ management hardware that moves a request to execute a PTG that is not scheduled to the last execution request entry of the second-highest-priority PTGQ when the PTG execution request is discovered.

The process of executing a single PTG illustrated in FIG. 3 may be used when a kernel is performed interactively with a host core, as in kernel code debugging.

The process of scheduling consecutive PTGs illustrated in FIG. 4 may be used in order to achieve high performance with low hardware costs.

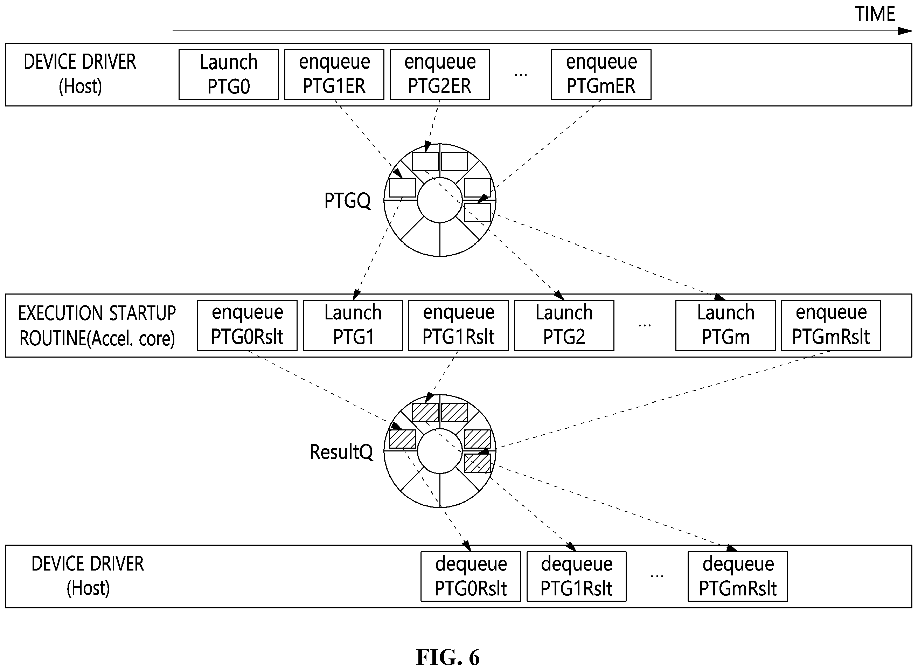

FIG. 6 is a view illustrating pipelining parallel thread group (PTG) execution requests and execution result reports between a device driver and the execution startup routine of a representative parallel thread (PT) according to an embodiment of the present disclosure.

Referring to FIG. 6, it can be seen that pipelining parallel thread group execution requests and execution result reports between a device driver and the execution startup routine of a representative parallel thread is illustrated with regard to FIG. 4 and FIG. 5.

If the device driver decides to use a parallel thread group queue (PTGQ) in scheduling registers, when execution of all of the parallel threads of a parallel thread group (PTG) is finished in FIG. 4 and FIG. 5, the designated representative parallel thread of the PTG may execute execution startup routine code, store parallel thread group execution completion information (corresponding to PTGxRslt in FIG. 6) as an entry of an execution result queue (ResultQ), and modify the value of the queue management register of the ResultQ.

Also, the execution startup routine code of the representative parallel thread reads one PTG execution request (corresponding to PTGxER in FIG. 6) from the PTGQ and sets the execution control registers, thereby scheduling the subsequent PTG on the ACG with low latency.

The device driver of the host core may successively insert PTG execution requests into the PTGQ.

Here, the representative parallel thread of an accelerating core may insert the PTG execution completion information into the ResultQ.

Here, the representative parallel thread of the accelerating core may remove one PTG execution request from the PTGQ and execute the subsequent PTGs on the accelerating core group thereof with low latency.

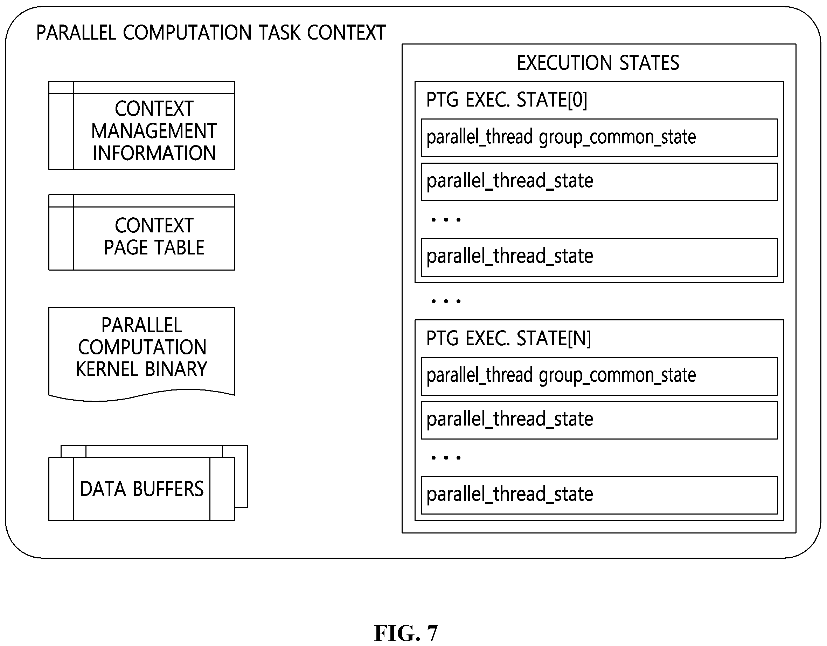

FIG. 7 is a view illustrating parallel computation task context according to an embodiment of the present disclosure.

Referring to FIG. 7, it can be seen that parallel computation task (PCT) context configured in memory is illustrated. The PCT context is a set of data objects generated in memory for an individual PCT, and may include objects, including context management information, a page table, a PCT kernel binary, data buffers used by a PCT, and the like, and execution states information objects required for execution of individual parallel threads in a parallel thread group (PTG). In order to execute a parallel thread group on an accelerating core group (ACG) as described above, an advance preparation task for executing parallel threads of each parallel thread group is required in a device driver. In order to execute parallel threads of the PCT merely by setting the PTG scheduling registers of the ACG, execution states information corresponding to the individual thread context of each parallel thread has to be prepared in memory.

The execution states information may include parallel thread group common state (parallel thread_group_common_state) information and individual parallel thread state (parallel_thread_state) information for all of the parallel threads included in the corresponding parallel thread group.

Here, the execution states information may be allocated in consecutive memory space.

The parallel thread group common state (parallel_thread_group_common_state) information may include the ID of the parallel thread group in the index space, the size of the parallel thread group, the size of the parallel computation task (index space), the total number of parallel thread groups, kernel argument information, and the like.

The individual parallel thread state (parallel_thread_state) information may include the local ID of the parallel thread, the global ID thereof, and the like.

Here, when a single parallel thread (PT) is executed in the hardware thread (HT) of each accelerating core (AC), the execution states information may be stored by being loaded into the control and status register of each hardware thread (HT). Then, user function code of a PCT kernel is executed, and when execution of the user function code of the PCT kernel is completed, issuance of an interrupt to a host core by an execution startup routine, update of an idle status register, or scheduling of the subsequent parallel thread group may be performed. The actual PCT context may be variously used in the scope in which the flow of the present disclosure is supported.

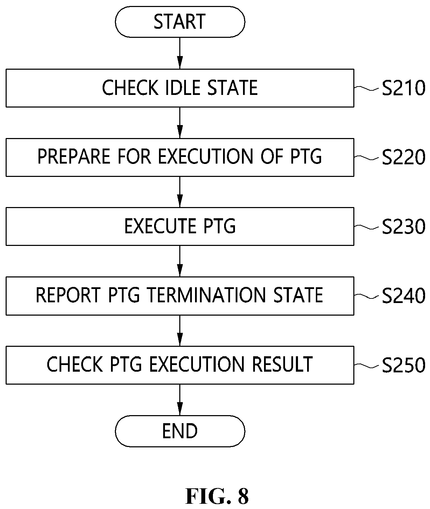

FIG. 8 is a flowchart illustrating a method for offloading parallel computation tasks according to an embodiment of the present disclosure.

Referring to FIG. 8, it can be seen that a method for offloading parallel computation tasks according to an embodiment of the present disclosure is illustrated as a flowchart of the process of executing a single parallel thread group between the device driver of a host and an accelerating core group (ACG), illustrated in FIG. 3.

In the method for offloading parallel computation tasks according to an embodiment of the present disclosure, an idle state may be checked at step S210.

That is, at step S210, the device driver of a host core 110 reads the value of the idle status register of an arbitrary accelerating core group (ACG), thereby confirming that the ACG is in an idle state.

Also, in the method for offloading parallel computation tasks according to an embodiment of the present disclosure, execution of a parallel thread group (PTG) may be prepared for at step S220.

That is, at step S220, the device driver sets valid values in registers for designating a PTG identifier, code required for execution, and a data structure, among execution control registers, thereby preparing for execution of the PTG.

Also, in the method for offloading parallel computation tasks according to an embodiment of the present disclosure, the PTG may be executed at step S230.

That is, at step S230, when the value of a PT simultaneous execution register, among the execution control registers, is changed, the ACG may immediately change the value of the idle status register hardwired to be connected with the PT simultaneous execution register from IDLE to BUSY.

Here, at step S230, all of the accelerating cores (ACs) 122 execute the parallel threads (PTs), thereby executing the PCT kernel function.

Also, in the method for offloading parallel computation tasks according to an embodiment of the present disclosure, a PTG execution termination state may be reported at step S240.

That is, at step S240, when execution of all of the executed parallel threads is terminated, a representative parallel thread selected in advance from among the parallel threads may report a termination state, such as success/failure or the like, through a PTG termination register. The representative parallel thread may be a thread selected in advance to be responsible for checking the state or may be the last finished thread.

Here, at step S240, the representative parallel thread may update the value of the idle status register, thereby changing the state from BUSY to IDLE.

Also, in the method for offloading parallel computation tasks according to an embodiment of the present disclosure, a PTG execution result may be checked at step S250.

That is, at step S250, the device driver may check termination of execution of the PTG through an interrupt or polling of the idle status register.

Here, at step S250, the device driver may check the execution result of the executed PTG by reading from the PTG termination register.

Also, in the method for offloading parallel computation tasks according to an embodiment of the present disclosure, a new PTG may be executed by repeating the above procedure.

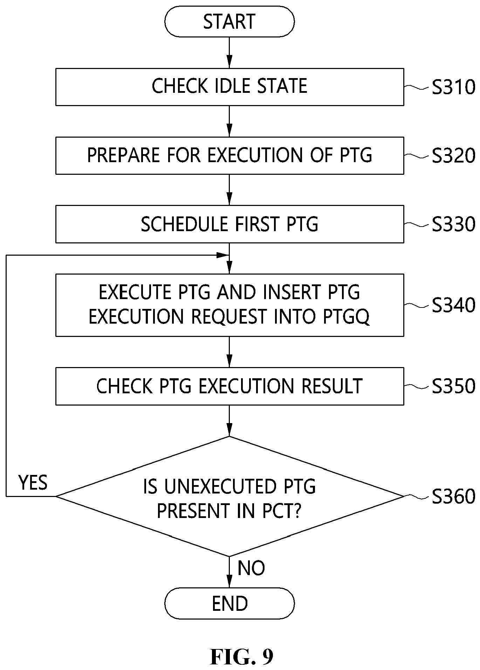

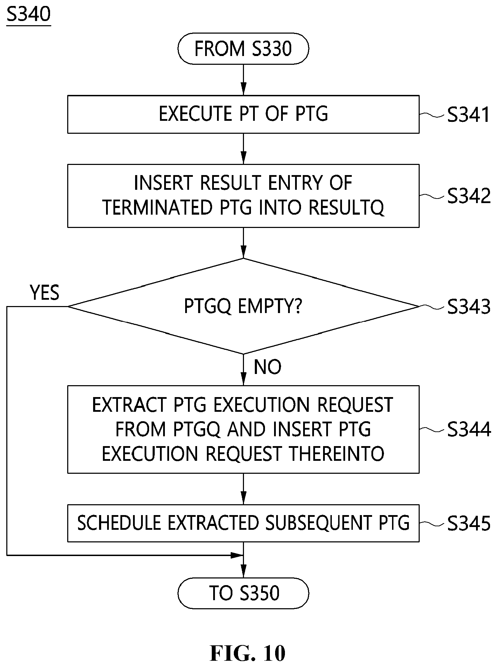

FIG. 9 is a flowchart illustrating a method for offloading parallel computation tasks for multiple parallel thread groups (PTGs) according to an embodiment of the present disclosure. FIG. 10 is a flowchart illustrating in detail an example of the step of inserting a PTG execution request into a parallel thread group queue (PTGQ) illustrated in FIG. 9.

Referring to FIG. 9, it can be seen that the method for offloading parallel computation tasks for multiple parallel thread groups (PTGs) according to an embodiment of the present disclosure is illustrated as a flowchart of the process of scheduling multiple parallel thread groups to which priority is applied between the device driver of a host core and an accelerating core group (ACG) illustrated in FIG. 5.

In the method for offloading parallel computation tasks for multiple PTGs according to an embodiment of the present disclosure, an idle state may be checked at step S310.

That is, at step S310, the device driver of a host core 110 reads the value of the idle status register of an arbitrary accelerating core group (ACG), thereby confirming that the ACG is in an idle state.

Also, in the method for offloading parallel computation tasks for multiple PTGs according to an embodiment of the present disclosure, execution of a parallel thread group (PTG) may be prepared for at step S320.

That is, at step S320, the device driver sets valid values in registers for designating a PTG identifier, code required for execution, and a data structure, among execution control registers, thereby preparing for execution of the PTG.

Also, in the method for offloading parallel computation tasks for multiple PTGs according to an embodiment of the present disclosure, the first PTG may be executed at step S330.

That is, at step S330, when the value of a PT simultaneous execution register, among the execution control registers, is changed, the ACG may immediately change the value of the idle status register hardwired to be connected with the PT simultaneous execution register from IDLE to BUSY.

Here, at step S330, all of the accelerating cores (ACs) execute the parallel threads (PTs), thereby executing the PCT kernel function.

Also, in the method for offloading parallel computation tasks for multiple PTGs according to an embodiment of the present disclosure, a PTG execution request may be inserted into a parallel thread group queue (PTGQ) at step S340.

Referring to FIG. 10, at step S340, first, parallel threads of the PTG may be executed at step S341.

That is, at step S341, after execution of the first PTG is terminated, the execution startup routine code of a representative parallel thread may execute parallel threads of a subsequent PTG without changing the value of the idle status register (maintaining `BUSY').

Here, at step S341, when the total number of parallel threads in one of the PTGs is greater than the total number of hardware threads included in the ACG, the accelerating core (AC) 122 may switch to a parallel thread context block (PTCB) of a parallel thread that is stalled due to memory access or the like to be loaded into scratchpad memory (SM) 123 using thread switching logic (thread switch-in/out).

Also, at step S340, the result entry of the terminated PTG may be inserted into an execution result queue (ResultQ) at step S342.

That is, at step S342, after execution of the PTG is terminated, the value of the idle status register is not changed, and the execution result may be reported through the ResultQ, rather than a termination register.

Here, at step S342, the execution startup routine code of the representative parallel thread may insert the result entry of the terminated PTG into the ResultQ.

Here, at step S342, when the ResultQ is full or is filled to a certain percentage or above, an interrupt may be delivered to the host core 110.

Also, at step S340, whether the parallel thread group queue (PTGQ) is empty may be checked at step S343.

That is, at step S343, if the PTGQ is not empty, when execution of one PTG is terminated, a PTG execution request entry may be extracted from the PTGQ, and an additional PTG execution request entry may be inserted thereinto at step S344. If the PTGQ is empty, the PTG execution procedure is terminated, and the PTG execution result may be reported at step S350.

Also, at step S340, a PTG execution request may be extracted from the PTGQ, and an additional PTG execution request may be inserted into the PTGQ at step S344.

That is, at step S344, when it is determined through a queue management register that the PTGQ is not empty, a PTG execution request entry may be extracted from the PTGQ when execution of one PTG is terminated.

Here, at step S344, the execution startup routine code of the representative parallel thread may extract the PTG execution request entry.

Here, at step S344, the PTG execution request may be extracted from any one of the PTGQs corresponding to priority according to a preset order of priority.

Here, at step S344, the host core 110 may insert an additional PTG execution request entry into the PTGQ.

Here, at step S344, the device driver inserts multiple PTG execution requests (ERs) into the PTGQ, and when an empty slot is found in the PTGQ by appropriately monitoring the state, the device driver may additionally insert a PTG execution request.

Also, at step S344, in order to prevent a PTG execution request in the low-priority PTGQ from being starved (indefinitely waiting), each accelerating core group (ACG) 120 may discover a request to execute a PTG that is not scheduled for a preset time period by using a programmable timer for each priority PTGQ.

Here, at step S344, when it discovers a request to execute a PTG that is not scheduled, each ACG 120 may move the PTG execution request to the last execution request entry of the second-highest-priority PTGQ.

Here, at step S344, when there is no execution request entry in the PTGQ or when entries account for less than a preset percentage of the PTGQ size, the ACG 120 may deliver an interrupt to the host core 110, on which the device driver is executed, depending on the setting of a scheduling control register.

Also, at step S345, the extracted subsequent PTG may be scheduled.

That is, at step S345, the PTG may be scheduled using the parallel thread group execution states information included in the parallel computation task context stored in advance in memory.

Here, the execution states information may include common state information for identifying the parallel thread groups and individual parallel thread state information for identifying the parallel threads included in the parallel thread groups.

Also, at step S345, the PTG may be executed through execution control registers.

Here, at step S345, the parallel threads of the PTGs scheduled by the execution startup routine code may be executed.

Here, at step S345, the PTG corresponding to the PTG execution request entry that the execution startup routine of the representative parallel thread extracts from the PTGQ may be executed.

Here, at step S345, the parallel threads of the scheduled PTG may be executed.

Also, in the method for offloading parallel computation tasks for multiple PTGs according to an embodiment of the present disclosure, a PTG execution result may be checked at step S350.

Here, at step S350, the execution result queue is checked, whereby the execution termination states of the PTGs may be checked.

Here, at step S350, the device driver checks the ResultQ by appropriately monitoring the state and extracts the execution result entry of the PTG from the queue as quickly as possible, thereby performing follow-up processing.

Also, in the method for offloading parallel computation tasks for multiple PTGs according to an embodiment of the present disclosure, whether an unexecuted PTG is present in the PCT may be checked at step S360.

That is, at step S360, whether an unexecuted PTG is present in the PCT is checked, and when an unexecuted PTG is present, the step (S340) of inserting a PTG execution request for the unexecuted PTG into the PTGQ and the step (S350) of checking the PTG execution result are repeated until the PCT has no more unexecuted PTGs, whereby execution of parallel threads of the parallel thread groups corresponding to the execution termination state may be repeated.

Accordingly, the present disclosure may perform scheduling through which, after termination of one PTG, another PTG is successively executed using simultaneous execution logic of a heterogeneous accelerating core group and execution startup routine software for executing an individual parallel computation task thread.

The execution startup routine software may be written as part of a parallel computation kernel when a PCT host process compiles the parallel computation kernel to be provided to a device driver. Accordingly, an additional scheduling algorithm may be added as the execution startup routine code at compile time, whereby scheduling flexibility for responding to various workloads may be secured.

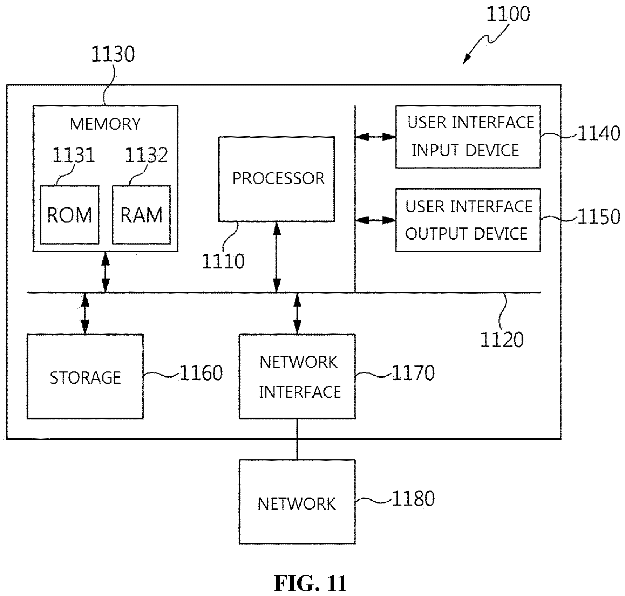

FIG. 11 is a view illustrating a computer system according to an embodiment of the present disclosure.

Referring to FIG. 11, the apparatus for offloading parallel computation tasks according to an embodiment of the present disclosure may be implemented in a computer system 1100 including a computer-readable recording medium. As illustrated in FIG. 11, the computer system 1100 may include one or more processors 1110, memory 1130, a user-interface input device 1140, a user-interface output device 1150, and storage 1160, which communicate with each other via a bus 1120. Also, the computer system 1100 may further include a network interface 1170 connected to a network 1180. The processor 1110 may be a central processing unit or a semiconductor device for executing processing instructions stored in the memory 1130 or the storage 1160. The memory 1130 and the storage 1160 may be any of various types of volatile or nonvolatile storage media. For example, the memory may include ROM 1131 or RAM 1132.

The apparatus for offloading parallel computation tasks according to an embodiment of the present disclosure includes one or more processors 1110 and memory 1130 for storing at least one program executed by the one or more processors 1110. The at least one program may insert requests to execute multiple parallel thread groups into at least one parallel thread group queues, wherein when a preset order of priority exists the requests to execute is inserted into the at least one parallel thread group queues according to the preset order of priority, execute parallel threads of the parallel thread groups using a parallel thread group execution request entry extracted from the parallel thread group queue according to the priority, insert an execution result into an execution result queue when execution of the parallel threads is terminated, check the execution termination state of the parallel thread groups by checking the execution result reported from the execution result queue, and execute parallel threads of the parallel thread groups corresponding to the execution termination state.

Here, the one or more processors 1110 may include one or more host cores 110, one or more accelerating cores 120, an accelerator memory management unit 130, and a memory controller 140.

Here, the at least one program may discover a request to execute a parallel thread group that is not scheduled for a preset time period by using a programmable timer in the parallel thread group queues corresponding to the priority.

Here, when it discovers a request to execute a parallel thread group that is not scheduled for the preset time period, the at least one program may move the request to execute the parallel thread group that is not scheduled for the preset time period to the last execution request entry of the second-highest-priority parallel thread group queue.

Here, the at least one program may schedule the execution sequence depending on the priority using parallel thread group execution states information included in parallel computation task context stored in advance in memory.

Here, the execution states information may include common state information for identifying the parallel thread groups and individual parallel thread state information for identifying parallel threads included in the parallel thread groups.

Here, when the total number of parallel threads in one of the parallel thread groups is greater than the number of hardware threads included in an accelerating core group, the at least one program may switch to a context block of a stalled parallel thread to be loaded into scratchpad memory using thread switching logic.

Here, the at least one program may cause a representative parallel thread that is selected in advance from among the parallel threads included in the parallel thread groups to insert the parallel thread group execution result in the execution result queue.

Here, the at least one program may execute a first parallel thread group selected from among the multiple parallel thread groups on any one accelerating core group.

Here, when it reads a value of an idle status register of the accelerating core group and confirms that the accelerating core group is in an idle state, the at least one program may execute all of parallel threads included in the first parallel thread group.

Here, the at least one program may change the value of the idle status register from IDLE to BUSY when all of the parallel threads included in the first parallel thread group are executed, and may change the value of the idle status register from BUSY to IDLE when execution of all of the parallel threads is terminated.

The present disclosure may quickly execute parallel computation tasks in a heterogeneous core processor system having heterogeneous accelerating cores without a hardware scheduler.

Also, the present disclosure may provide a hardware and software execution support architecture and flow that can be effectively implemented in a large-scale parallel processing environment.

Also, the present disclosure may simultaneously provide execution performance of a large-scale parallel processing computation element and flexibility for responding to various workloads.

Also, the present disclosure may prevent entries having low priority from being starved (indefinitely waiting) without software intervention.

As described above, the apparatus and method for offloading parallel computation tasks according to the present disclosure are not limitedly applied to the configurations and operations of the above-described embodiments, but all or some of the embodiments may be selectively combined and configured, so the embodiments may be modified in various ways.

## Claims

1. An apparatus for offloading parallel computation tasks, comprising:
one or more processors; and
memory for storing at least one program executed by the one or more processors,
wherein the at least one program
inserts requests to execute multiple parallel thread groups into at least one parallel thread group queues, wherein when a preset order of priority exists the requests to execute is inserted into the at least one parallel thread group queues according to the preset order of priority,
executes parallel threads of the parallel thread groups using a parallel thread group execution request entry extracted from the parallel thread group queue according to the order of priority,
inserts an execution result into an execution result queue when execution of the parallel threads is terminated,
checks an execution termination state of the parallel thread groups by checking the execution result reported from the execution result queue, and
executes parallel threads of parallel thread groups corresponding to the execution termination state.

2. The apparatus of claim 1, wherein the at least one program discovers a request to execute a parallel thread group that is not scheduled for a preset time period by using a programmable timer in the parallel thread group queues corresponding to the priority.

3. The apparatus of claim 2, wherein, when the at least one program discovers the request to execute the parallel thread group that is not scheduled for the preset time period, the at least one program moves the request to execute the parallel thread group that is not scheduled for the preset time period to a last execution request entry of a parallel thread group queue having second-highest priority.

4. The apparatus of claim 1, wherein the at least one program loads information required for execution of parallel computation kernel code from execution states information into a register of an accelerating core by executing execution startup routine code for each parallel thread of the parallel thread groups and then executes the parallel computation kernel code.

5. The apparatus of claim 4, wherein the execution states information includes common state information for identifying the parallel thread groups and individual parallel thread state information for identifying parallel threads included in the parallel thread groups.

6. The apparatus of claim 1, wherein, when a total number of parallel threads in one of the parallel thread groups is greater than a number of hardware threads included in an accelerating core group, the at least one program switches to a context block of a stalled parallel thread so as to be loaded into scratchpad memory using thread switching logic.

7. The apparatus of claim 1, wherein the at least one program causes a representative parallel thread selected in advance from among parallel threads included in the parallel thread groups to insert the execution result of the parallel thread group into the execution result queue.

8. The apparatus of claim 1, wherein the at least one program executes a first parallel thread group selected from among the multiple parallel thread groups on any one accelerating core group.

9. The apparatus of claim 8, wherein, when the at least program reads a value of an idle status register of the accelerating core group and confirms that the accelerating core group is in an idle state, the at least one program executes all of parallel threads included in the first parallel thread group.

10. The apparatus of claim 9, wherein the at least one program changes the value of the idle status register from IDLE to BUSY when all of the parallel threads included in the first parallel thread group are executed, and changes the value of the idle status register from BUSY to IDLE when execution of all of the parallel threads is terminated.

11. A method for offloading parallel computation tasks, performed by an apparatus for offloading parallel computation tasks, comprising:
inserting requests to execute multiple parallel thread groups into at least one parallel thread group queues, wherein when a preset order of priority exists the requests to execute is inserted into the at least one parallel thread group queues according to the preset order of priority;
executing parallel threads of the parallel thread groups using a parallel thread group execution request entry extracted from the parallel thread group queue according to the order of priority;
inserting an execution result into an execution result queue when execution of the parallel threads is terminated;
checking an execution termination state of the parallel thread groups by checking the execution result reported from the execution result queue; and
executing parallel threads of parallel thread groups corresponding to the execution termination state.

12. The method of claim 11, wherein inserting the execution result comprises inserting, by a representative parallel thread selected in advance from among parallel threads included in the parallel thread groups, the execution result of the parallel thread group into the execution result queue.

13. The method of claim 11, further comprising:
before inserting the requests to execute the multiple parallel thread groups,
executing a first parallel thread group selected from among the multiple parallel thread groups on any one accelerating core group.

14. The method of claim 13, wherein executing the first parallel thread group comprises executing all of parallel threads included in the first parallel thread group when it is confirmed that the accelerating core group is in an idle state by reading a value of an idle status register of the accelerating core group.

15. The method of claim 14, wherein executing the first parallel thread group comprises changing the value of the idle status register from IDLE to BUSY when all of the parallel threads included in the first parallel thread group are executed and changing the value of the idle status register from BUSY to IDLE when execution of all of the parallel threads is terminated.
